# EUROPEAN PATENT APPLICATION

(11) **EP 4 398 511 A1**
(43) Date of publication of application: **10.07.2024**
(21) Application number: 23150802.9
(22) Date of filing: 09.01.2023
(51) Int. Cl.: H04L 9/00, H04L 9/06

(54) **METHOD OF PROTECTING A CRYPTOGRAPHIC DEVICE AGAINST SIDE-CHANNEL ATTACKS**

(71) Applicant: NXP B.V., 5656 AG Eindhoven (NL)
(72) Inventor: Connor, Jack, 5656 AG Eindhoven (NL); Veshchikov, Nikita, 5656 AG Eindhoven (NL); Azouaoui, Melissa, 5656 AG Eindhoven (NL)
(74) Representative: Krott, Michel

(57) **Abstract**

In accordance with a first aspect of the present disclosure, a method of protecting a cryptographic device against side-channel attacks is conceived, the cryptographic device comprising a cryptographic unit and a processing unit, and the method comprising: performing, by the cryptographic unit, a cryptographic operation on input data, wherein said cryptographic operation generates at least one intermediate result; generating, by the processing unit, a set of possible values of the intermediate result; leaking, by the cryptographic device, said set of possible values of the intermediate result. In accordance with a second aspect of the present disclosure, a computer program is provided for carrying out said method. In accordance with a third aspect of the present disclosure, a corresponding cryptographic device is provided.

## Description

### TECHNICAL FIELD

The present disclosure relates to a method of protecting a cryptographic device against side-channel attacks. Furthermore, the present disclosure relates to a computer program for carrying out said method, and to a corresponding cryptographic device.

### BACKGROUND

Side-channel attacks on cryptographic devices exploit the physical properties (e.g., the power consumption) of said devices to extract secret information from them. To thwart side-channel attacks, countermeasures can be implemented. Hiding countermeasures aim to make the side-channel measurements independent of the secret information being processed. One such hiding countermeasure is a noise engine (i.e., noise generator). A noise engine provides a random switching activity in parallel to the main activity of the cryptographic device, in order to dominate the total power consumption. In this way, the noise generator reduces the signal-to-noise ratio (SNR) of the secret in the measurements.

### SUMMARY

In accordance with a first aspect of the present disclosure, a method of protecting a cryptographic device against side-channel attacks is conceived, the cryptographic device comprising a cryptographic unit and a processing unit, and the method comprising: performing, by the cryptographic unit, a cryptographic operation on input data, wherein said cryptographic operation generates at least one intermediate result; generating, by the processing unit, a set of possible values of the intermediate result; leaking, by the cryptographic device, said set of possible values of the intermediate result.

In one or more embodiments, the cryptographic device leaks the set of possible values of the intermediate result after the processing unit has generated said set.

In one or more embodiments, the possible values of the intermediate result are generated and leaked one at a time.

In one or more embodiments, the cryptographic device leaks said possible values using a leakage register.

In one or more embodiments, the cryptographic operation uses a key, and the processing unit derives the possible values of the intermediate result from possible values of said key.

In one or more embodiments, the cryptographic operation is a block cipher, in particular an advanced encryption standard (AES) block cipher.

In one or more embodiments, the processing unit generates the possible values of the intermediate result by performing XOR-operations, wherein each of the XOR-operations is performed on a predefined portion of the input data and on a predefined portion of a possible key value, and by performing S-box operations on the output of the XOR-operations.

In one or more embodiments, the S-box operations are executed by an unsecured S-box implementation.

In one or more embodiments, all possible values of the intermediate result are generated and leaked.

In one or more embodiments, the cryptographic device leaks the possible values of the intermediate result in a predefined, device-specific order.

In one or more embodiments, the cryptographic device uses a device-specific permutation seed, shuffling algorithm and/or generation function to leak the possible values of the intermediate result in said predefined, device-specific order.

In one or more embodiments, the processing unit comprises multiple sub-engines operating in parallel, wherein each of said sub-engines generates a part of the set of possible values of the intermediate result.

In one or more embodiments, the processing unit is supplied with a faster clock than the cryptographic unit, and/or the processing unit applies pipelining to generate the set of possible values of the intermediate result.

In accordance with a second aspect of the present disclosure, a computer program is provided, comprising executable instructions which, when executed by a cryptographic device, carry out a method of the kind set forth.

In accordance with a third aspect of the present disclosure, a cryptographic device is provided, comprising a cryptographic unit and a processing unit, wherein: the cryptographic unit is configured to perform a cryptographic operation on input data, wherein said cryptographic operation generates at least one intermediate result; the processing unit is configured to generate a set of possible values of the intermediate result; the cryptographic device is configured to leak said set of possible values of the intermediate result.

### DESCRIPTION OF DRAWINGS

Embodiments will be described in more detail with reference to the appended drawings.
Fig. 1 shows an example of a cryptographic device.
Fig. 2 shows an example of a portion of a block cipher algorithm.
Fig. 3 shows an illustrative embodiment of a method of protecting a cryptographic device against side-channel attacks.
Fig. 4 shows an illustrative embodiment of a cryptographic device.
Fig. 5 shows a computation of possible intermediate values.
Fig. 6 shows a scheme for leaking possible intermediate values.
Fig. 7 shows another computation of possible intermediate values.
Fig. 8 shows an illustrative embodiment of a method for facilitating the leakage of possible intermediate values.
Fig. 9 shows another illustrative embodiment of a cryptographic device.
Fig. 10 shows techniques for accelerating the computation of possible intermediate values.
Fig. 11 shows correlation results of different key guesses for a cryptographic device.
Fig. 12A shows a maximum correlation score evolution for a cryptographic device.
Fig. 12B shows a key rank evolution for a cryptographic device.
Fig. 13 shows correlation results of different key guesses for a cryptographic device having a noise generator.
Fig. 14A shows a maximum correlation score evolution for a cryptographic device having a noise generator.
Fig. 14B shows a key rank evolution for a cryptographic device having a noise generator.
Fig. 15 shows correlation results of different key guesses for a cryptographic device having a signal engine.
Fig. 16A shows a maximum correlation score evolution for a cryptographic device having a signal engine.
Fig. 16B shows a key rank evolution for a cryptographic device having a signal engine.
Fig. 17 shows correlation results of different key guesses for a cryptographic device having a signal engine and masking countermeasures.

### DESCRIPTION OF EMBODIMENTS

Information technology (IT) security largely relies on cryptography. One of the main building blocks of cryptography is encryption. The security of encryption algorithms mainly relies on the secrecy of a special value called a key. Given a good encryption scheme it should be impossible to decrypt a secret message without the knowledge of the necessary secret key.

Many attacks on encryption systems try to extract the secret key from the device that is encrypting or decrypting data. One of the strongest types of attacks against cryptographic devices are referred to as side-channel attacks (SCAs). Side-channel attacks try to break the implementation of a cryptographic algorithm. In other words, they try to extract the secret key from a device that encrypts (or decrypts) data. SCAs use physical properties of devices to extract keys, such as the power consumption of the devices, sound produced by the devices or the time that the devices take to encrypt data.

Differential power attacks (DPAs) are among the most common side-channel attacks that do not require access to a clone device over which they have control. They aim to recover a secret by attacking an intermediate value of an algorithm that is a function of the secret. They first amass a dataset of measurements, all using the same fixed secret. Then for each value the secret can take (i.e., for each key candidate), they hypothesize the intermediate values and statistically compare them with the measurements, e.g. by calculating the correlation between the measurements and the hypothetical intermediate values. When they hypothesize the correct key candidate, the hypothetical intermediate values will in fact be the actual intermediate values being processed, and the correlation will be higher than for the other candidates, thereby exposing the secret value.

It is noted that cryptographic algorithms are not limited to encryption algorithms. In particular, the present disclosure does not only relate to encryption algorithms, but also to other types of cryptographic algorithms, such as decryption algorithms, algorithms for generating digital signatures, computations of message authentication code (MACs), and authenticated encryption schemes. Furthermore, the present disclosure relates to symmetric cryptographic algorithms as well as asymmetric cryptographic algorithms.

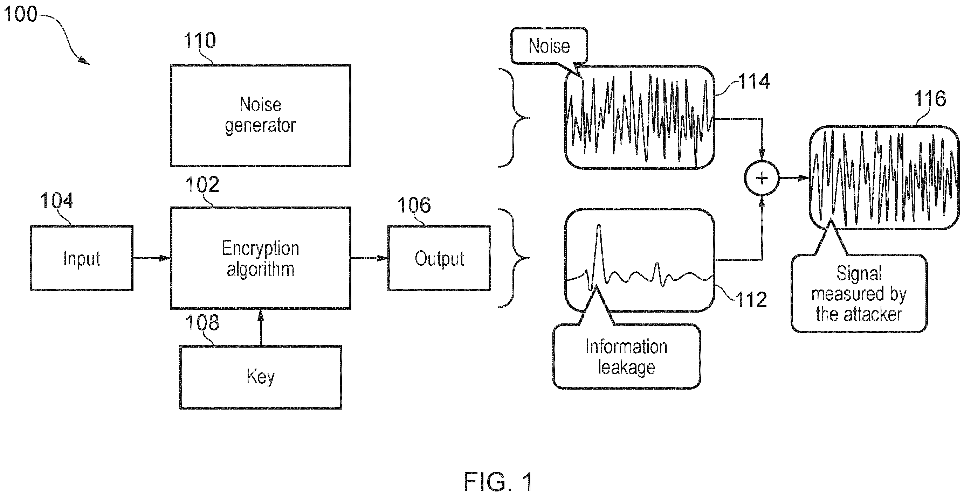

**Fig. 1** shows an example of a cryptographic device 100. In particular, a typical countermeasure against side-channel attacks is shown. The cryptographic device 100 comprises an encryption algorithm 102, which may be executed by an encryption unit (not shown). The encryption algorithm 102 encrypts an input 104 using a key 108, resulting in an output 106. Furthermore, in order to increase the resistance against side-channel attacks, the cryptographic device 100 comprises a noise generator 110. Thus, the noise generator 110 is added to the design of the implementation of the cipher. The noise generator 110 can be based on many different algorithms, but its basic function is to manipulate many different values to increase the electrical and thermal noise of the cryptograph device 100. The attacker's data (e.g., power traces) would contain a combination of the leakage 112 from the encryption algorithm 102 and the noise from the noise generator 110. This leads to a reduced signal-to-noise ratio (SNR). Thus, the data that an attacker would collect will contain more noise and less information.

Among the main techniques that attackers use to counteract this approach is to use noise filtering algorithms, which ultimately requires to collect more data. That makes the side-channel attacks against implementations with noise generators slightly more complex, mainly by requiring longer data acquisition campaigns. It is important to note that even though the signals generated by different components of a system are simulated or drawn separately, an attacker cannot measure them separately. In case of power analysis the attacker can only measure the combination of all parts of the system (the total power consumption). Even in case of electro-magnetic analysis the attacker cannot completely isolate the signal coming from only one component (hardware block) of the device, neighboring components will still have an influence on the measured signal that the attacker can observe. However, although noise generation complicates side-channel attacks, it is often still possible to successfully perform them.

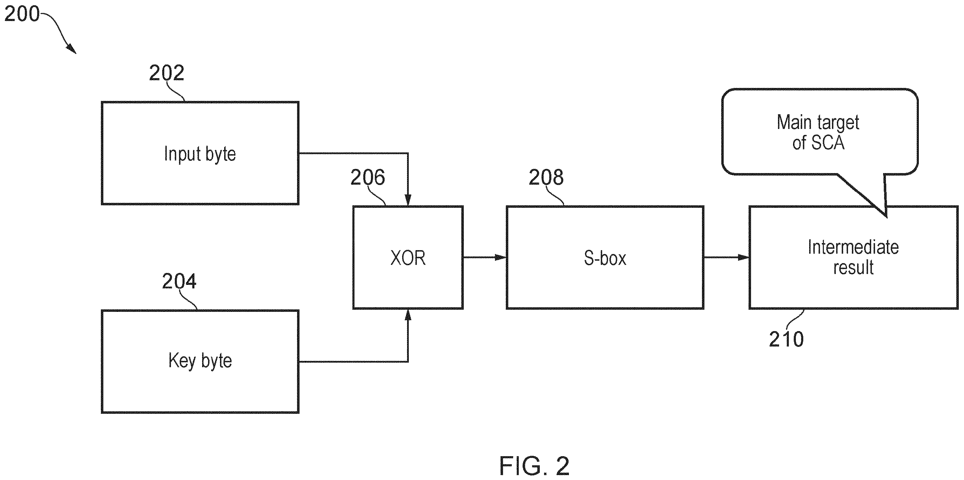

**Fig. 2** shows an example of a portion 200 of a block cipher algorithm. In this example, the block cipher algorithm is an advanced encryption standard (AES) block cipher algorithm. Side-channel attacks are typically performed on such a portion 200 of a block cipher algorithm, with the aim of obtaining an intermediate result 210. In particular, an XOR operation 206 is performed on an input byte 202 and a key byte 204. Then, an S-box operation 208 is performed on the output of the XOR operation 206, which results in the intermediate result 210. In practice, the implementation of this part of a block cipher may be slightly more complex since it usually takes into account SCAs and thus adds a masking countermeasure to the implementation. In other words, the usual implementation of an S-box is a protected implementation. In case of a given device, the key byte 204 is fixed and is a part of the secret key while the input byte 202 (i.e., the plaintext byte) is provided by a user.

Now discussed are a method of protecting a cryptographic device against side-channel attacks, a computer program for carrying out said method, and a corresponding cryptographic device. The method facilitates the protection of the cryptographic device against side-channel attacks, in the sense that the resistance of the cryptographic device against side-channel attacks is increased.

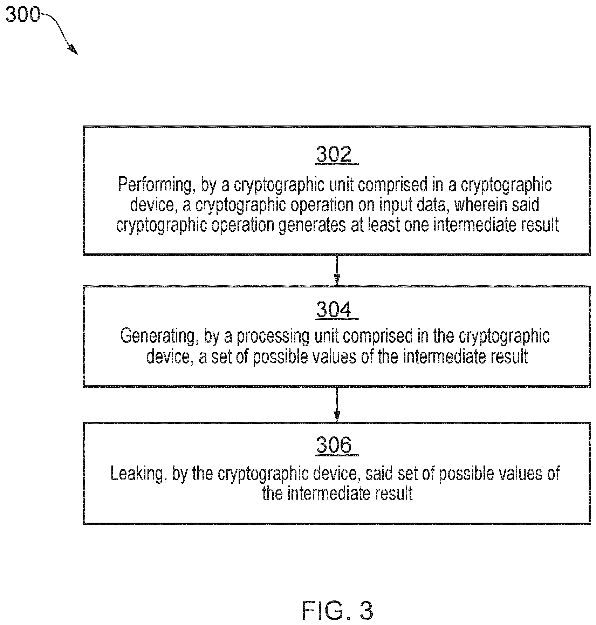

**Fig. 3** shows an illustrative embodiment of a method 300 of protecting a cryptographic device against side-channel attacks. The method 300 comprises the following steps. At 302, a cryptographic unit comprised in a cryptographic device performs a cryptographic operation on input data, wherein said cryptographic operation generates at least one intermediate result. At 304, a processing unit comprised in the cryptographic device generates a set of possible values of the intermediate result. Furthermore, at 306, the cryptographic device leaks said set of possible values of the intermediate result. By leaking a set of possible values of the intermediate result of the cryptographic operation, the resistance against side-channel attacks is increased. In particular, by purposefully leaking information about both the correct intermediate value candidate and incorrect intermediate value candidates through side-channels, an attacker will be unable to distinguish between these candidates and struggle to reduce the search space. Furthermore, using more measurements may not help, because the incorrect candidate leakage will get stronger, rather than diminish, with each added measurement. The skilled person will appreciate that leaking information means that said information is made available in such a way that an attacker will be able to retrieve it when carrying out an attack. The leaking may be implemented in any suitable way.

In one or more embodiments, the cryptographic device leaks the set of possible values of the intermediate result after the processing unit has generated said set. In this way, the generation and leakage of the possible values may be implemented in an efficient manner. Alternatively, the possible values of the intermediate result may be generated and leaked one at a time. This may result in another efficient implementation of the generation and leakage of the possible values. For instance, in a practical implementation, the cryptographic device leaks said possible values using a leakage register.

In one or more embodiments, the cryptographic operation uses a key, and the processing unit derives the possible values of the intermediate result from possible values of said key. Thus, the presently disclosed method may be applied to protect cryptographic devices that execute common key-based cryptographic algorithms. Furthermore, in one or more embodiments, the cryptographic operation is a block cipher, in particular an advanced encryption standard (AES) block cipher. Thus, the presently disclosed method may be applied to protect cryptographic devices that execute common block ciphers.

In one or more embodiments, the processing unit generates the possible values of the intermediate result by performing XOR-operations, wherein each of the XOR-operations is performed on a predefined portion of the input data and on a predefined portion of a possible key value, and by performing S-box operations on the output of the XOR-operations. In this way, the application of the presently disclosed method to protect cryptographic devices executing common block ciphers is facilitated. Furthermore, in one or more embodiments, the S-box operations are executed by an unsecured S-box implementation. In this way, the possible values may be generated more efficiently, and in addition more information will be leaked through side-channels, compared to a scenario in which a secure S-box implementation is used.

In one or more embodiments, all possible values of the intermediate result are generated and leaked. In other words, the processing unit may generate all values which the intermediate result can have. In this way, the amount of information that is leaked through the side-channels may be increased, compared to a scenario in which only a subset of said values is generated, for example. Furthermore, in one or more embodiments, the cryptographic device leaks the possible values of the intermediate result in a predefined, device-specific order. In this way, the resistance against side-channel attacks is further increased. In practical implementations, the cryptographic device uses a device-specific permutation seed, shuffling algorithm and/or generation function to leak the possible values of the intermediate result in said predefined, device-specific order.

In one or more embodiments, the processing unit comprises multiple sub-engines operating in parallel, wherein each of said sub-engines generates a part of the set of possible values of the intermediate result. In this way, the speed with which the possible values are generated may be increased. Furthermore, in one or more embodiments, the processing unit is supplied with a faster clock than the cryptographic unit, and/or the processing unit applies pipelining to generate the set of possible values of the intermediate result. In this way, the speed with which the possible values are generated may be increased.

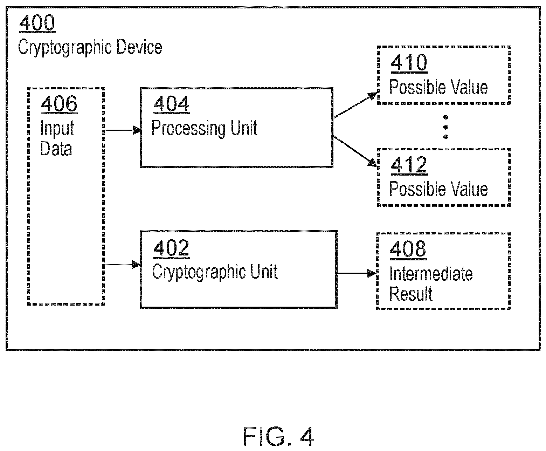

**Fig. 4** shows an illustrative embodiment of a cryptographic device 400. The cryptographic device 400 comprises a cryptographic unit 402 and a processing unit 404. The cryptographic unit 402 is configured to perform a cryptographic operation on input data, wherein said cryptographic operation generates at least one intermediate result. The processing unit 404 is configured to generate a set of possible values of the intermediate result. Furthermore, the cryptographic device 400 is configured to leak said set of possible values of the intermediate result. As mentioned above, by leaking a set of possible values of the intermediate result of the cryptographic operation, the resistance against side-channel attacks is increased.

In accordance with the present disclosure, a special block may be added in a cryptographic device, together with an encryption engine. However, instead of generating a random signal that is different every single time (i.e., instead of generating noise), a specially crafted non-random signal may be generated. This signal is dependent on the input of the algorithm and the signal generator generates possible values that the signal can have. For example, the signal generator may generate all possible values that the signal can have. Thus, some or all possible intermediate values for the target of an attacker may be purposefully leaked. Thus, instead of seeing one clear signal in the data the attacker would see some or all possible values and would not be able to easily distinguish between the correct intermediate value and the incorrect intermediate values. It is noted that the signal is generated by a processing unit, which is referred to as a "signal engine" herein.

It is noted that the operation of the signal engine is explained herein with reference to an AES block cipher and the most common target of SCAs, i.e. the S-box of the AES block cipher. In particular, the explanation relates to only one S-box, one byte of the key and one byte of the plaintext (input). However, the presently disclosed method may also be applied to other algorithms and other operations. Referring to an AES block cipher, all possible 256 values (in case of one byte) may be leaked always in the same way or, in other words, always at the same location in time and always in relationship with the input. In this way, all traces acquired by the attacker will have the same information leakages in the same locations and thus the attacker will find it more difficult to extract the real leakage and the real value of the key. To leak some or all possible values two steps should be performed. First, the possible intermediate values should be generated, and then these values should be leaked. These steps may be executed in different ways. For instance, the steps may be performed as subsequent steps or as interleaved steps. In the former case, the possible values are first generated, and subsequently leaked as a set of possible values. In the latter case, each possible value may be generated and leaked separately: one possible value may be generated and leaked, then a next possible value may be generated and leaked, etc.

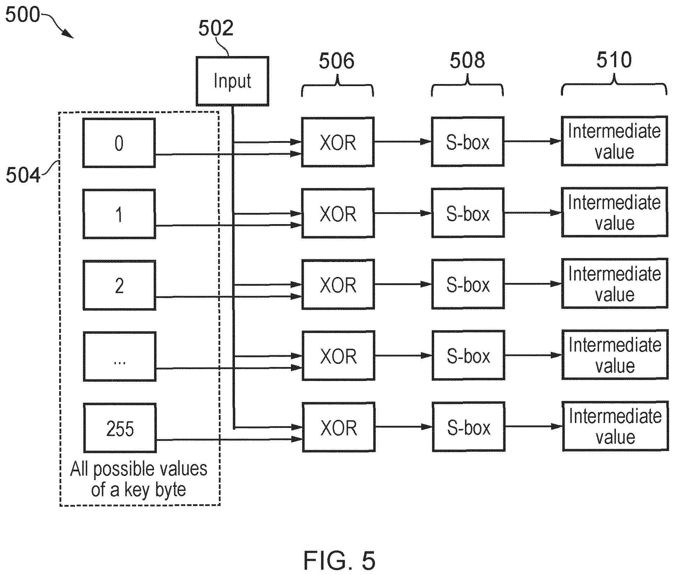

**Fig. 5** shows a computation 500 of possible intermediate values (i.e., of possible values of an intermediate result). More specifically, Fig. 5 shows a computation 500 of all possible intermediate values corresponding to all possible key byte values 504 of a portion of a block cipher. For each possible key byte value, a regular computation is performed, comprising performing an XOR operation 506 with an input 502 (i.e., an input byte), performing an S-box operation 508 on the output of the XOR operation 506, resulting in a possible intermediate value 510. Preferably, the S-box operation 508 is not based on a secure, masked implementation. In particular, an unsecured S-box implementation is more efficient (i.e., faster and smaller) than a secured S-box implementation. Furthermore, an unsecured S-box implementation will leak more information through side-channels than a secured S-box implementation. This, in turn, may further increase the difficulty for an attacker to extract useful information, since more information regarding incorrect possible intermediate values will be leaked.

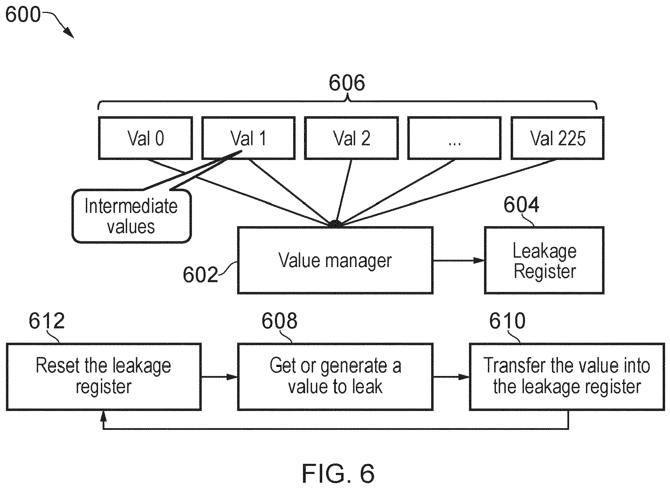

**Fig. 6** shows a scheme 600 for leaking possible intermediate values 606. More specifically, Fig. 6 shows how possible intermediate values 606 are leaked one at a time through a leakage register 604, which is controlled (i.e., set and reset) by a value manager 602. The values 606 can be computed on the fly, or all of them can be computed in advance. Resetting the leakage register 604 can be done in different ways, depending on the type of device and implementation. More specifically, the leakage register 604 can be reset to the value zero to leak the Hamming weight (HW) of the intermediate value, or it can be reset to the value that corresponds to the input of the S-box to leak the Hamming distance (HD). Both are common leakage functions that are used by attackers. In case of an HD leakage, the inputs to the S-box should also be stored, or the same register should be reused for the computation, which may result in an efficient implementation of the leakage scheme 600.

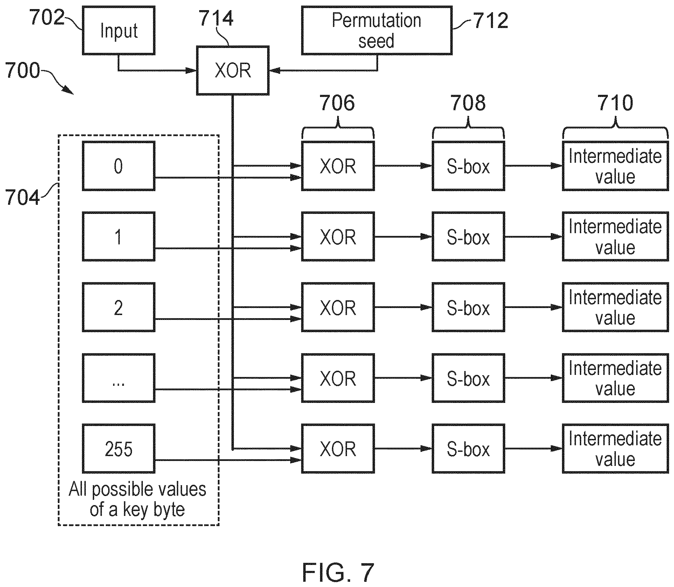

**Fig. 7** shows another computation 700 of possible intermediate values. More specifically, Fig. 7 shows a computation 700 of all possible intermediate values corresponding to all possible key byte values 704 of a portion of a block cipher. For each possible key byte value, a computation is performed, comprising performing an XOR operation with an input value, performing an S-box operation 708 on the output of the XOR operation 706, resulting in a possible intermediate value 710. Preferably, the S-box operation 708 is not based on a secure, masked implementation. In this example, the input value is obtained by performing another XOR operation 714. This XOR operation 714 is performed on an input 702 (i.e., an input byte) and a permutation seed 712. In this way, the possible intermediate values 710 are shuffled by means of the permutation seed 712, which may be a device-specific, fixed random value. Thus, the cryptographic device may leak the possible intermediate values 710 in a predefined, device-specific order, such that the resistance against side-channel attacks is further increased.

It is noted that if all the possible key byte values are always used in the order from 0 to 255, then the attacker will find it easier to detect that such scheme is being used, and he will have a way of countering it. Thus, it may be beneficial to use a sequence that is different (i.e., random) for different devices. There are various ways of creating such a sequence. For example, one could perform an XOR operation 714 with a fixed random value (i.e., the permutation seed 712) and the input 702, before proceeding to the next steps, as shown in Fig. 7. This will have the effect of shuffling the values from 0 to 255 in a different order. It is noted that, depending on the S-box which is used, it is sometimes possible to include a permutation seed in the implementation of the S-box. This may result in an efficient implementation, which is feasible because only the presence of all values in a fixed order is relevant for the purpose of complicating the attacks. In other words, the specific value of the output is irrelevant. For example, for the S-box of the AES block cipher, one can "remove" the XOR 6316 from it to make its implementation smaller and faster, since the AES S-box is computed using the following transformation: S = b + (b<<<1) + (b<<<2) + (b<<<3) + (b<<<4) + 63₁₆, wherein 63 represents a value in hexadecimal, the + sign represents an XOR operation, and the <<< sign represents a left-wise circular shift of the input value b. By removing the last +63₁₆ one can make a more efficient implementation of the S-box for the signal engine, which can be used for protecting the AES block cipher.

Instead of using a XOR operation with a permutation seed, one may also use a generation function that will go through all values between 0 and 255 in a fixed order, which can be modified using a seed or any of the shuffling algorithms to rearrange the values between 0 and 255 (in case of one byte). If such a permutation seed is used, it should be stored and should be chosen at random when a new key is set for the encryption. Furthermore, the same permutation seed should be used for different encryptions while the same key is used. This will ensure that the same order of all possible values is used, which in turn will make the same values leak at a fixed point in time and mislead the attacker by hiding the real leakage.

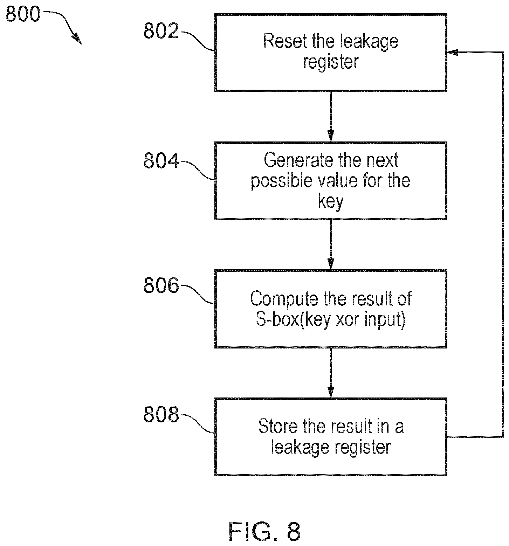

**Fig. 8** shows an illustrative embodiment of a method 800 for facilitating the leakage of possible intermediate values. In particular, a leakage register is used to facilitate said leakage of possible intermediate values. The method 800 comprises the following steps. At 802, the leakage register is reset. Then, at 804, the next possible value for the key is generated. Furthermore, at 806, the result of the following operation is computed: S-box(key XOR input). Then, at 808, the result of said operation is stored in the leakage register. Subsequently, the method 800 returns to step 802.

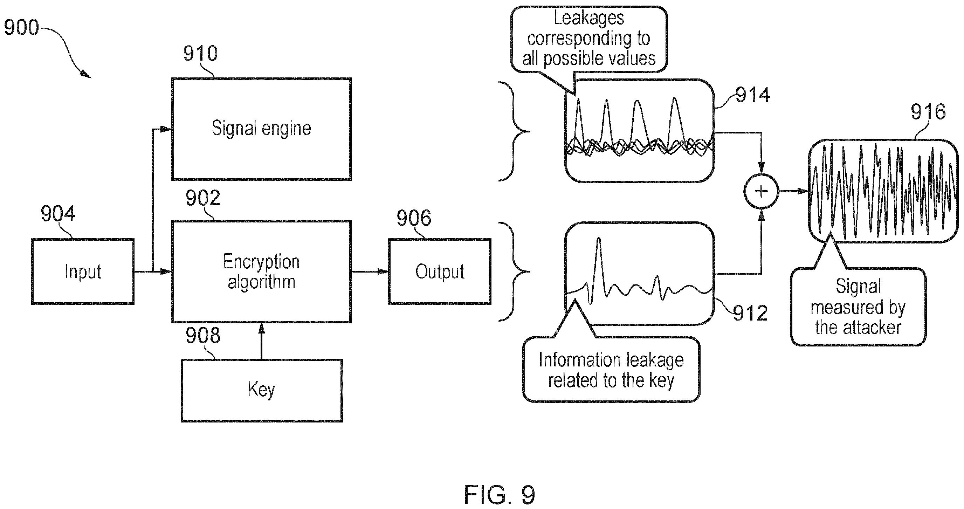

**Fig. 9** shows another illustrative embodiment of a cryptographic device 900. In particular, a countermeasure against side-channel attacks is shown, which is based on a signal engine as disclosed herein. The cryptographic device 900 comprises an encryption algorithm 902, which may be executed by an encryption unit (not shown). The encryption algorithm 902 encrypts an input 904 using a key 908, resulting in an output 906. Furthermore, in order to increase the resistance against side-channel attacks, the cryptographic device 900 comprises a signal engine 910. Thus, the signal engine 910 is added to the design of the implementation of the cipher.

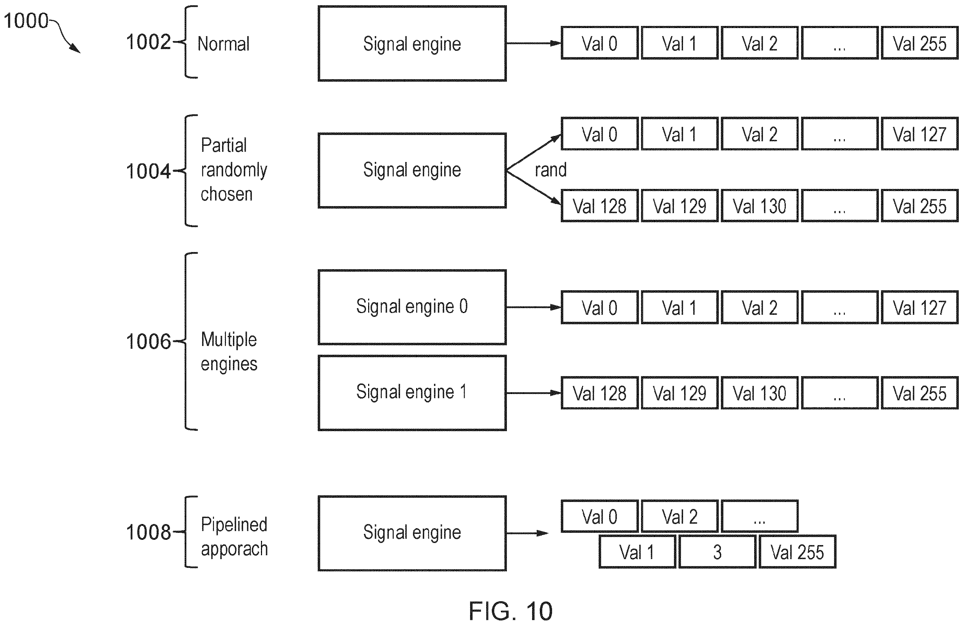

**Fig. 10** shows techniques 1000 for accelerating the computation of possible intermediate values. In particular, the speed with which one can generate all the possible intermediate values and leak them may be relatively low. Indeed, even though the signal engine does not require a protected implementation of an S-box and thus it can be faster, there are 256 possible values that it has to generate in case of one byte. At the same time, the protected implementation of the cipher has to compute only one S-box. To accelerate the generation of the possible intermediate values, several techniques may be used.

First, only a part of all possible intermediate values may be computed. For example, instead of generating all 256 possible intermediate values, one may only generate 128, 64 or 32 possible intermediate values (randomly chosen or fixed ones). This will have a smaller effect against the attacker, but will still require him to deal with the additional leakages. Furthermore, several signal engines may be used in parallel, and the work may be distributed between them (e.g., 4 signal engines each processing 64 values to obtain all the 256 possible values). Furthermore, a faster clock may be used for the signal engine (compared to the encryption engine) as well as a pipeline, to enable it to compute the values faster. Finally, a combination of these techniques, which are illustrated in Fig. 10, may also be used. Another technique that can be used to fit the signal engine into the timing constraints is not to process all parts of the input. For example, a typical AES block is 16 bytes long, in which case one could use the signal engine on the 8 bytes while the normal encryption engine handles the encryption normally (i.e., on the 16 bytes). Then only 8 bytes will have a higher protection and will make it more difficult for the attacker to extract the key.

The following figures illustrate experimental results, which illustrate the effect achieved by the presently disclosed method. First, the results of an attack on an unprotected implementation is shown (i.e., an implementation which is not protected using the presently disclosed method). Subsequently, the results of the same attack on an implementation using a noise generator is shown, followed by the results of the same attack on an implementation using a signal engine of the kind set forth above.

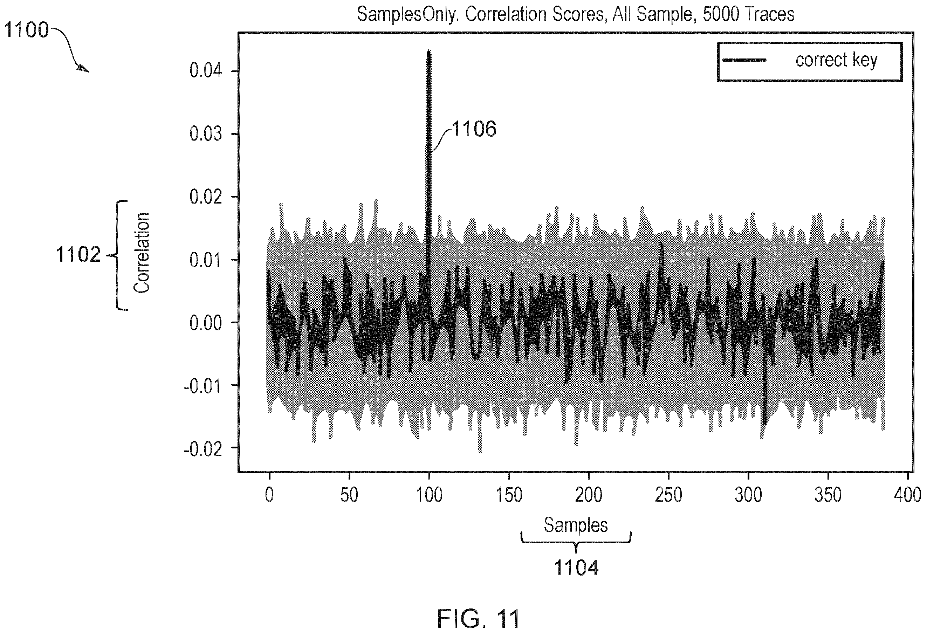

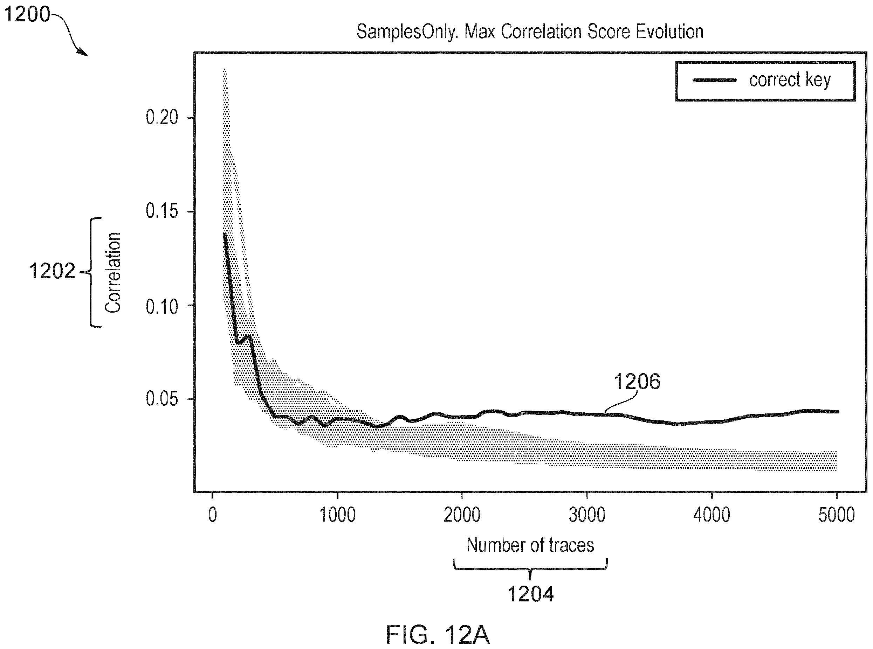

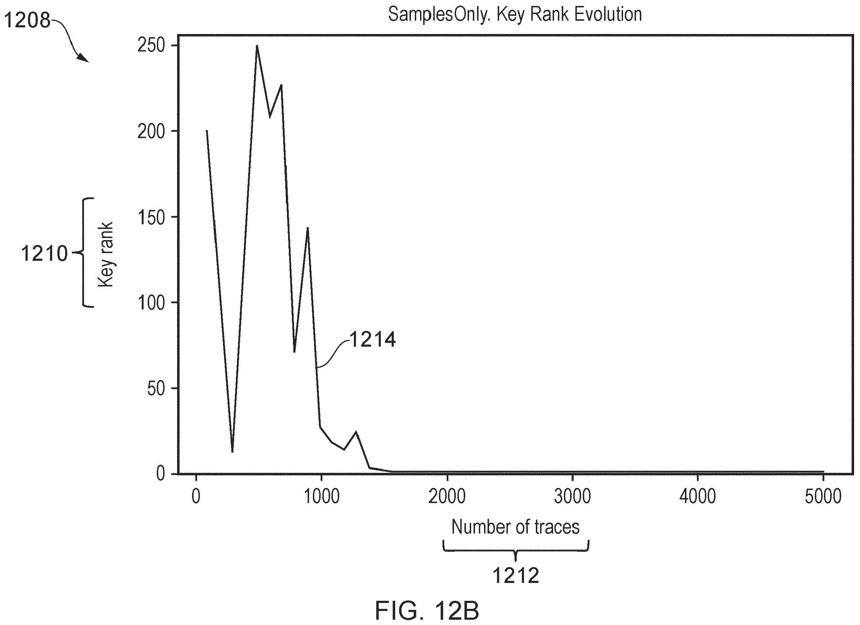

**Figs. 11****,** **12A** **and** **12B** show experimental results of an attack on an unprotected implementation. In particular, Fig. 11 shows correlation results 1100 of different key guesses for a cryptographic device, Fig. 12A shows a maximum correlation score evolution 1200 for the cryptographic device, and Fig. 12B shows a key rank evolution 1208 for the cryptographic device. The attack is a correlation power analysis attack (CPA), which targets only one byte of the key. The skilled person will appreciate that other bytes may be attacked in the same manner. It can easily be seen that the implementation is vulnerable to a CPA attack and that the key can be extracted with high confidence using approximately 1500 traces.

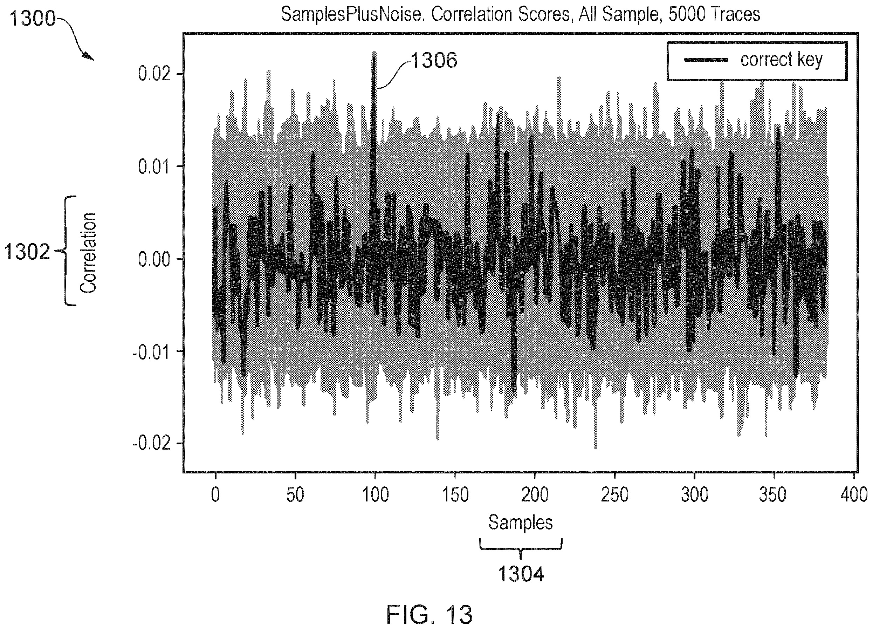

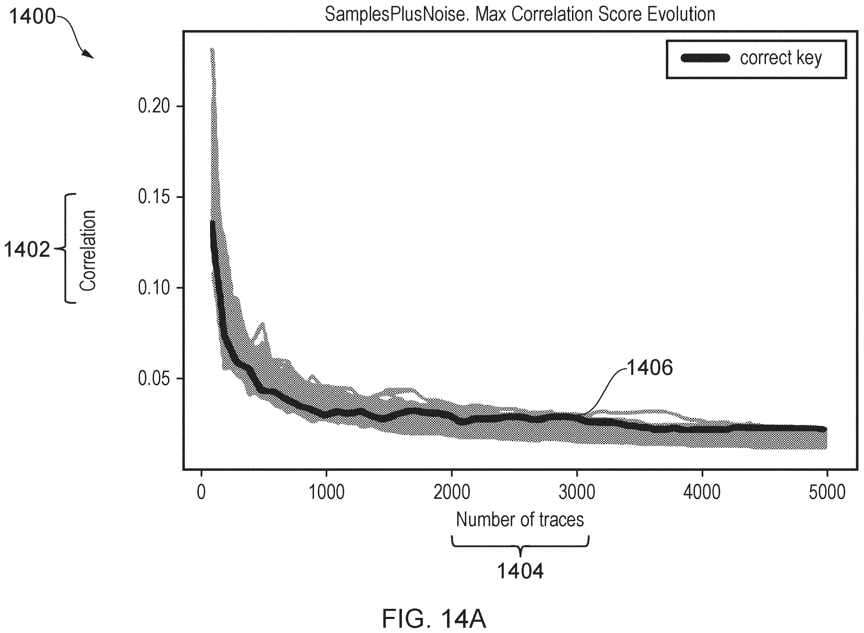

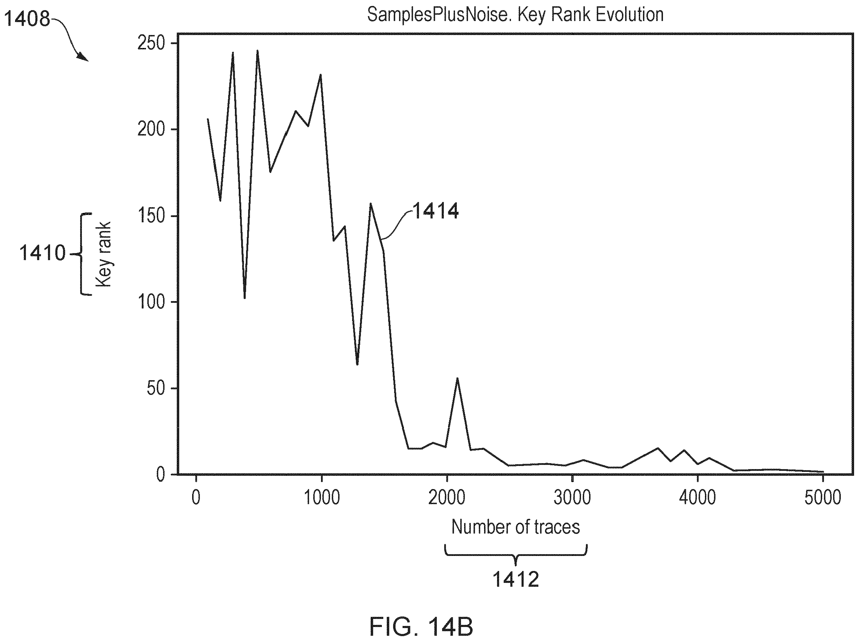

**Figs. 13****,** **14A** **and** **14B** show experimental results of an attack on an implementation using a noise generator. In particular, Fig. 13 shows correlation results 1300 of different key guesses for a cryptographic device having a noise generator, Fig. 14A shows a maximum correlation score evolution 1400 for the cryptographic device having the noise generator, and Fig. 14B shows a key rank evolution 1408 for the cryptographic device having the noise generator. It can be seen that more traces (around 5000) are needed to extract the key with high confidence, which is expected due to the higher noise.

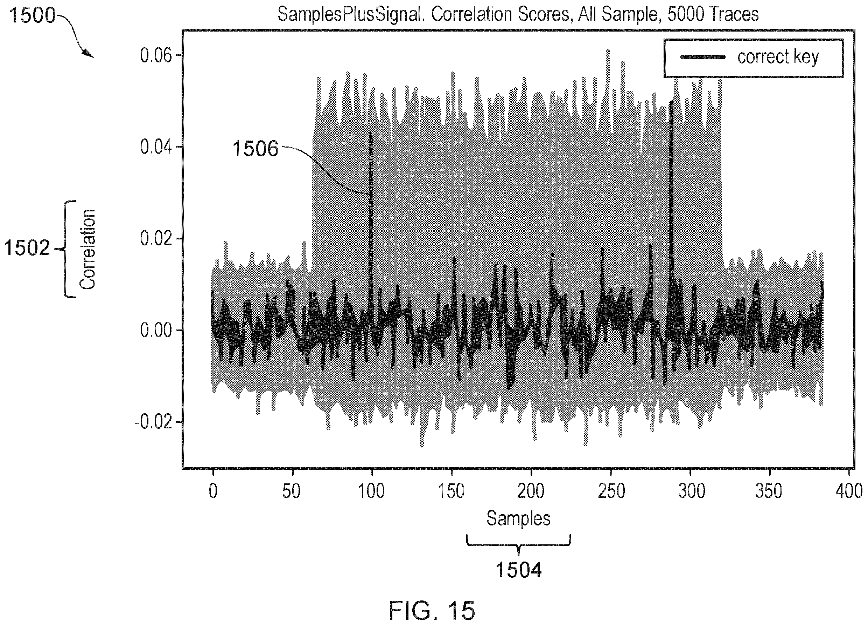

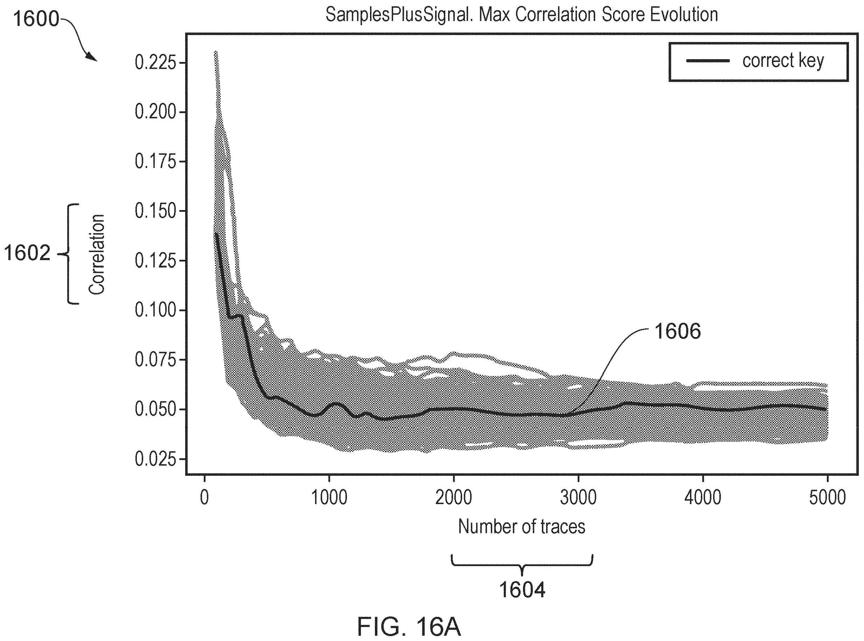

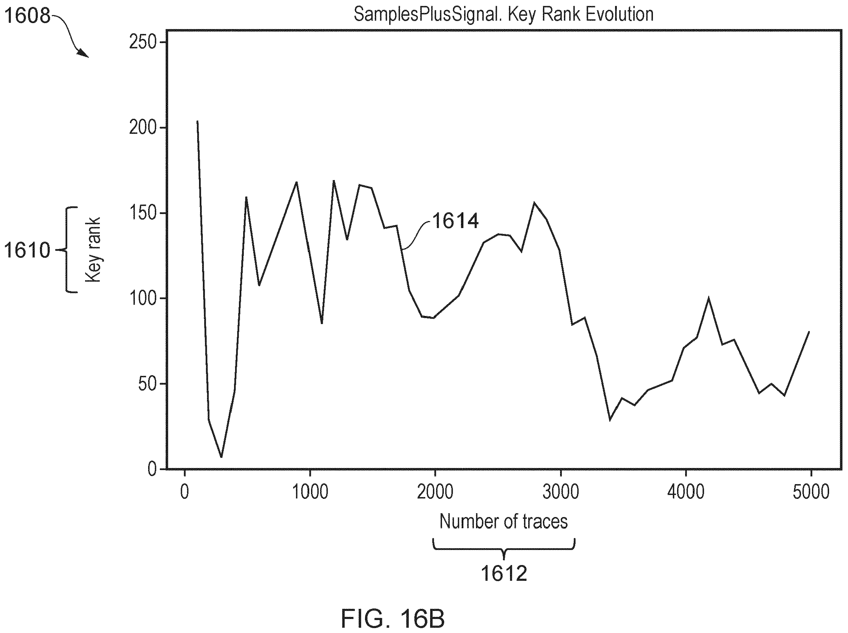

**Figs. 15****,** **16A** **and** **16B** show experimental results of an attack on an implementation using a signal engine of the kind set forth above. In particular, Fig. 15 shows correlation results 1500 of different key guesses for a cryptographic device having a signal engine, Fig. 16A shows a maximum correlation score evolution 1600 for the cryptographic device having the signal engine, and Fig. 16B shows a key rank evolution 1608 for the cryptographic device having the signal engine. It can be seen that even with 5000 traces the key-ranking of 0 is still not reached. In other words, the attack is not successful with the number of traces that was sufficient to attack the unprotected implementation and the implementation with a noise generator. It is noted that an attacker can reduce the amount of noise generated by a noise generator by using more traces. More specifically, the noise can be filtered by averaging because the noise is independent at every moment in time. However, when the signal engine is used, another kind of noise may be produced, which is not independent. More specifically, a noise signal may be generated which is correlated with all possible intermediate values. This also implies that the noise signal does not change from one encryption to another, and it cannot be filtered out by using more traces.

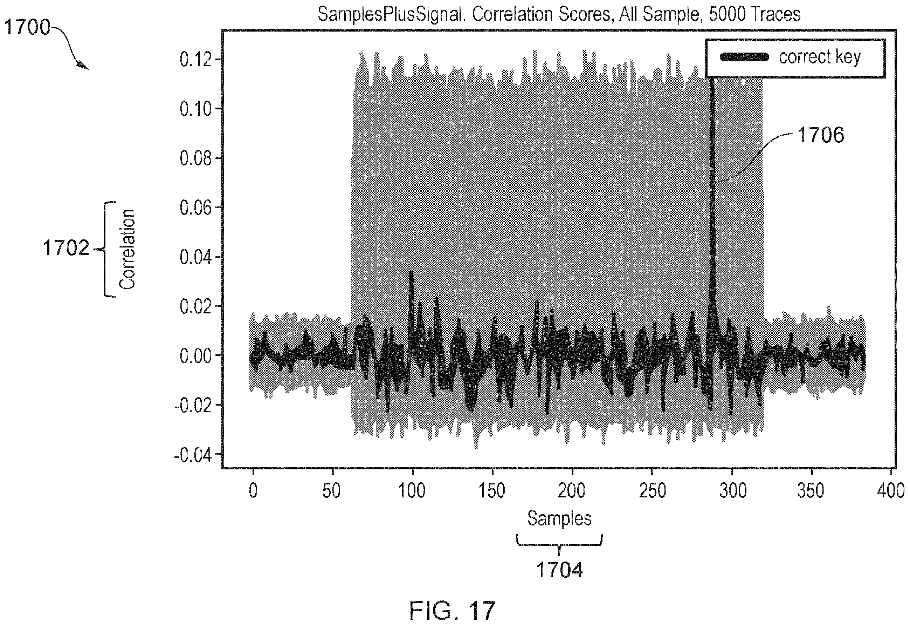

**Fig. 17** shows correlation results 1700 of different key guesses for a cryptographic device having a signal engine and masking countermeasures. It is noted that there are two spikes for the correct key guess in Fig. 15, because one of them corresponds to the actual use of the correct key and the second one corresponds to its use by the signal engine. However, Fig. 15 illustrates an attack on an implementation that does not use any additional protection methods. In practice, the first spike will be extremely low due to the use of other countermeasures, such as shuffling and masking, which is illustrated in Fig. 17.

Furthermore, it is noted that in case an attacker would know about the use of a signal engine, he might improve the attack to try to mitigate it. The first thing that the attacker could do is to remove the highest correlation candidates from all the correlation results, which will remove all the fake leakages originating from the signal engine. However, usually there are multiple high correlation points in the neighborhood of the leakage point, so it is not easy to determine how many points one has to discard, since discarding too many might also discard the information about the real leakage.

The systems and methods described herein may at least partially be embodied by a computer program or a plurality of computer programs, which may exist in a variety of forms both active and inactive in a single computer system or across multiple computer systems. For example, they may exist as software program(s) comprised of program instructions in source code, object code, executable code or other formats for performing some of the steps. Any of the above may be embodied on a computer-readable medium, which may include storage devices and signals, in compressed or uncompressed form.

As used herein, the term "computer" refers to any electronic device comprising a processor, such as a general-purpose central processing unit (CPU), a specific-purpose processor or a microcontroller. A computer is capable of receiving data (an input), of performing a sequence of predetermined operations thereupon, and of producing thereby a result in the form of information or signals (an output). Depending on the context, the term "computer" will mean either a processor in particular or more generally a processor in association with an assemblage of interrelated elements contained within a single case or housing.

The term "processor" or "processing unit" refers to a data processing circuit that may be a microprocessor, a co-processor, a microcontroller, a microcomputer, a central processing unit, a field programmable gate array (FPGA), a programmable logic circuit, and/or any circuit that manipulates signals (analog or digital) based on operational instructions that are stored in a memory. The term "memory" refers to a storage circuit or multiple storage circuits such as read-only memory, random access memory, volatile memory, non-volatile memory, static memory, dynamic memory, Flash memory, cache memory, and/or any circuit that stores digital information.

As used herein, a "computer-readable medium" or "storage medium" may be any means that can contain, store, communicate, propagate, or transport a computer program for use by or in connection with the instruction execution system, apparatus, or device. The computer-readable medium may be, for example but not limited to, an electronic, magnetic, optical, electromagnetic, infrared, or semiconductor system, apparatus, device, or propagation medium.

It is noted that the embodiments above have been described with reference to different subject-matters. In particular, some embodiments may have been described with reference to method-type claims whereas other embodiments may have been described with reference to apparatus-type claims. However, a person skilled in the art will gather from the above that, unless otherwise indicated, in addition to any combination of features belonging to one type of subject-matter also any combination of features relating to different subject-matters, in particular a combination of features of the method-type claims and features of the apparatus-type claims, is considered to be disclosed with this document.

Furthermore, it is noted that the drawings are schematic. In different drawings, similar or identical elements are provided with the same reference signs. Furthermore, it is noted that in an effort to provide a concise description of the illustrative embodiments, implementation details which fall into the customary practice of the skilled person may not have been described. It should be appreciated that in the development of any such implementation, as in any engineering or design project, numerous implementation-specific decisions must be made in order to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

Finally, it is noted that the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. Measures recited in the claims may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE SIGNS

- 100: cryptographic device
- 102: encryption algorithm
- 104: input
- 106: output
- 108: key
- 110: noise generator
- 112: information leakage
- 114: noise
- 116: signal measured by the attacker
- 200: portion of a block cipher algorithm
- 202: input byte
- 204: key byte
- 206: XOR operation
- 208: S-box operation
- 210: intermediate result
- 300: method of protecting a cryptographic device against side-channel attacks
- 302: performing, by a cryptographic unit comprised in a cryptographic device, a cryptographic operation on input data, wherein said cryptographic operation generates at least one intermediate result
- 304: generating, by a processing unit comprised in the cryptographic device, a set of possible values of the intermediate result
- 306: leaking, by the cryptographic device, said set of possible values of the intermediate result
- 400: cryptographic device
- 402: cryptographic unit
- 404: processing unit
- 406: input data
- 408: intermediate result
- 410: possible value
- 412: possible value
- 500: computation of possible intermediate values
- 502: input
- 504: all possible values of a key byte
- 506: XOR operations
- 508: S-box operations
- 510: intermediate values
- 600: scheme for leaking intermediate values
- 602: value manager
- 604: leakage register
- 606: intermediate values
- 608: get or generate a value to leak
- 610: transfer the value into the leakage register
- 612: reset the leakage register
- 700: computation of possible intermediate values
- 702: input
- 704: all possible values of a key byte
- 706: XOR operations
- 708: S-box operations
- 710: intermediate values
- 800: method for facilitating the leakage of intermediate values
- 802: reset the leakage register
- 804: generate the next possible value for the key
- 806: compute the result of S-box(key XOR input)
- 808: store the result in a leakage register
- 900: cryptographic device
- 902: encryption algorithm
- 904: input
- 906: output
- 908: key
- 910: signal engine
- 912: information leakage related to the key
- 914: leakages corresponding to all possible values
- 916: signal measured by the attacker
- 1000: techniques for accelerating the computation of possible values
- 1002: normal computation
- 1004: partial randomly chosen values
- 1006: multiple engines
- 1008: pipelined approach
- 1100: correlation results for different key guesses
- 1102: correlation result
- 1104: samples
- 1106: correct key
- 1200: maximum correlation score evolution
- 1202: maximum correlation
- 1204: number of traces
- 1206: correct key
- 1208: key rank evolution
- 1210: key rank
- 1212: number of traces
- 1300: correlation results for different key guesses
- 1302: correlation result
- 1304: samples
- 1306: correct key
- 1400: maximum correlation score evolution
- 1402: maximum correlation
- 1404: number of traces
- 1406: correct key
- 1408: key rank evolution
- 1410: key rank
- 1412: number of traces
- 1500: correlation results for different key guesses
- 1502: correlation result
- 1504: samples
- 1506: correct key
- 1600: maximum correlation score evolution
- 1602: maximum correlation
- 1604: number of traces
- 1606: correct key
- 1608: key rank evolution
- 1610: key rank
- 1612: number of traces
- 1700: correlation results for different key guesses
- 1702: correlation result
- 1704: samples
- 1706: correct key

## Claims

1. A method of protecting a cryptographic device against side-channel attacks, the cryptographic device comprising a cryptographic unit and a processing unit, and the method comprising:
performing, by the cryptographic unit, a cryptographic operation on input data, wherein said cryptographic operation generates at least one intermediate result;
generating, by the processing unit, a set of possible values of the intermediate result;
leaking, by the cryptographic device, said set of possible values of the intermediate result.

2. The method of claim 1, wherein the cryptographic device leaks the set of possible values of the intermediate result after the processing unit has generated said set.

3. The method of claim 1, wherein the possible values of the intermediate result are generated and leaked one at a time.

4. The method of claim 3, wherein the cryptographic device leaks said possible values using a leakage register.

5. The method of any preceding claim, wherein the cryptographic operation uses a key, and wherein the processing unit derives the possible values of the intermediate result from possible values of said key.

6. The method of any preceding claim, wherein the cryptographic operation is a block cipher, in particular an advanced encryption standard, AES, block cipher.

7. The method of claims 5 and 6, wherein the processing unit generates the possible values of the intermediate result by performing XOR-operations, wherein each of the XOR-operations is performed on a predefined portion of the input data and on a predefined portion of a possible key value, and by performing S-box operations on the output of the XOR-operations.

8. The method of claim 7, wherein the S-box operations are executed by an unsecured S-box implementation.

9. The method of any preceding claim, wherein all possible values of the intermediate result are generated and leaked.

10. The method of any preceding claim, wherein the cryptographic device leaks the possible values of the intermediate result in a predefined, device-specific order.

11. The method of claim 10, wherein the cryptographic device uses a device-specific permutation seed, shuffling algorithm and/or generation function to leak the possible values of the intermediate result in said predefined, device-specific order.

12. The method of any preceding claim, wherein the processing unit comprises multiple sub-engines operating in parallel, wherein each of said sub-engines generates a part of the set of possible values of the intermediate result.

13. The method of any preceding claim, wherein the processing unit is supplied with a faster clock than the cryptographic unit, and/or wherein the processing unit applies pipelining to generate the set of possible values of the intermediate result.

14. A computer program comprising executable instructions which, when executed by a cryptographic device, carry out the method of any preceding claim.

15. A cryptographic device comprising a cryptographic unit and a processing unit, wherein:
the cryptographic unit is configured to perform a cryptographic operation on input data, wherein said cryptographic operation generates at least one intermediate result;
the processing unit is configured to generate a set of possible values of the intermediate result;
the cryptographic device is configured to leak said set of possible values of the intermediate result.

## Amended claims

### Amended claims in accordance with Rule 137(2) EPC.

1. A method (300) of protecting a cryptographic device against side-channel attacks, the cryptographic device comprising a cryptographic unit and a processing unit, and the method comprising:
performing (302), by the cryptographic unit, a cryptographic operation on input data, wherein said cryptographic operation generates at least one intermediate result;
generating (304), by the processing unit, a set of possible values of the intermediate result;
leaking (306), by the cryptographic device, said set of possible values of the intermediate result.

2. The method (300) of claim 1, wherein the cryptographic device leaks the set of possible values of the intermediate result after the processing unit has generated said set.

3. The method (300) of claim 1, wherein the possible values of the intermediate result are generated and leaked one at a time.

4. The method (300) of claim 3, wherein the cryptographic device leaks said possible values using a leakage register.

5. The method (300) of any preceding claim, wherein the cryptographic operation uses a key, and wherein the processing unit derives the possible values of the intermediate result from possible values of said key.

6. The method (300) of any preceding claim, wherein the cryptographic operation is a block cipher, in particular an advanced encryption standard, AES, block cipher.

7. The method (300) of claims 5 and 6, wherein the processing unit generates the possible values of the intermediate result by performing XOR-operations, wherein each of the XOR-operations is performed on a predefined portion of the input data and on a predefined portion of a possible key value, and by performing S-box operations on the output of the XOR-operations.

8. The method (300) of claim 7, wherein the S-box operations are executed by an unsecured S-box implementation.

9. The method (300) of any preceding claim, wherein all possible values of the intermediate result are generated and leaked.

10. The method (300) of any preceding claim, wherein the cryptographic device leaks the possible values of the intermediate result in a predefined, device-specific order.

11. The method (300) of claim 10, wherein the cryptographic device uses a device-specific permutation seed, shuffling algorithm and/or generation function to leak the possible values of the intermediate result in said predefined, device-specific order.

12. The method (300) of any preceding claim, wherein the processing unit comprises multiple sub-engines operating in parallel, wherein each of said sub-engines generates a part of the set of possible values of the intermediate result.

13. The method (300) of any preceding claim, wherein the processing unit is supplied with a faster clock than the cryptographic unit, and/or wherein the processing unit applies pipelining to generate the set of possible values of the intermediate result.

14. A computer program comprising executable instructions which, when executed by a cryptographic device, carry out the method (300) of any preceding claim.

15. A cryptographic device (400) comprising a cryptographic unit (402) and a processing unit (404), wherein:
the cryptographic unit (402) is configured to perform a cryptographic operation on input data (406), wherein said cryptographic operation generates at least one intermediate result (408);
the processing unit (404) is configured to generate a set of possible values (410, 412) of the intermediate result (408);
the cryptographic device (400) is configured to leak said set of possible values (410, 412) of the intermediate result (408).
